# DEMANDE DE BREVET EUROPEEN

(11) **EP 1 830 293 A1**
(43) Date de publication de la demande: **05.09.2007**
(21) Numéro de dépôt: 06017741.7
(22) Date de dépôt: 25.08.2006
(51) Int. Cl.: G06F 21/00, G06F 21/24, G07F 7/10

(54) **Procédé de vérification de la conformité du contenu logique d'un appareil informatique à un contenu de reférence**

(30) Priorité: 01.03.2006 EP 06290345
(71) Demandeur: Ingenico SA, 92200 Neuilly sur Seine (FR)
(72) Inventeur: Naccache, David, 75018 Paris (FR)
(74) Mandataire: Hirsch & Associés

(57) **Abrégé**

Un appareil informatique présente un processeur (4), une mémoire (6) dans laquelle le processeur peut lire et écrire, et un dispositif d'entrée sortie (8) permettant un dialogue entre le processeur (4) de l'appareil et le monde extérieur. Pour vérifier la conformité du contenu logique de l'appareil contenu de référence, on envoie (10) à l'appareil (2) une demande de chargement dans la mémoire (6) et d'exécution d'un programme de vérification (P). Le programme de vérification est capable d'écrire des données dans la mémoire (6) de l'appareil et de lire des données dans la mémoire (6) pour les envoyer vers le dispositif d'entrée sortie (8). Ensuite, on envoie (12) à l'appareil d'une demande d'exécution du programme (P) pour saturer la mémoire (6) disponible non occupée par le programme (P). Enfin, on échange (14, 16) des messages avec l'appareil en exécutant le programme (P). En fonction des messages échangés, la conformité du contenu logique de l'appareil est avérée.

## Description

La présente invention concerne les appareils informatiques et plus spécifiquement la vérification de la conformité du contenu logique d'un appareil informatique à un contenu de référence.

On appelle appareil informatique un appareil de traitement de l'information, comprenant un processeur associé à une mémoire de stockage, ainsi que des dispositifs d'entrée-sortie. Le processeur, la mémoire, comme les dispositifs d'entrée-sortie peuvent être réalisés suivant différentes solutions matérielles. Ainsi, la mémoire peut par exemple comprendre une mémoire de type EEPROM, EPROM ou mémoire Flash. L'appareil est capable de charger dans le processeur un programme ou logiciel contenu dans la mémoire, et d'exécuter le programme ou logiciel. L'appareil est capable de communiquer avec l'extérieur par le biais des dispositifs d'entrée-sortie, pour recevoir de l'information en provenance de l'extérieur ou transmettre de l'information vers l'extérieur. Entrent dans cette définition d'appareil informatique les cartes à puces, terminaux de paiement, assistants personnels numériques (PDA), terminaux de télévisions à péage, et ordinateurs. Ces appareils diffèrent par le type de processeur, le type de mémoire, le type de dispositifs d'entrée-sortie ainsi que par leur destination.

Pour un tel appareil, on appelle contenu logique ou état logique le contenu de la mémoire - qu'il s'agisse de code exécutable, de paramètres ou encore de données passives.

Un problème rencontré pour les appareils informatiques est celui de la conformité du contenu logique de l'appareil à un contenu de référence. Ce problème se pose lorsque l'on dispose d'un appareil, dont sont connues les spécifications matérielles, en particulier la taille de la mémoire et le type de processeur. Le problème est de savoir si l'appareil dont on dispose se trouve dans un état de référence. L'état de référence peut correspondre à un contenu logique donné - une certaine information présente dans la mémoire - ou encore à une absence d'information dans la mémoire.

Ce problème se pose notamment pour les cartes à puce et les terminaux de paiement; en effet, on écrit dans les mémoires de ces appareils des informations à caractère confidentiel.

La personnalisation de cartes à puce (pour des applications de téléphonie à la norme GSM, paiement ou identité) et de terminaux de paiement comporte une phase d'injection de code exécutable vers ces appareils. Typiquement, des cartes à puce à systèmes d'exploitation ouverts (comme celles vendues comme conformes à la norme « Javacard ») permettent l'ajout de programmes ou extensions exécutables dans la mémoire non-volatile de la carte (typiquement EEPROM, EPROM ou Flash).

De même, l'initialisation de terminaux de paiement tel celui vendu sous la référence 5100 par la société INGENICO comporte une phase où l'on charge dans la mémoire non-volatile du terminal (typiquement EEPROM, EPROM, Flash ou RAM sauvegardée par batterie) une application spécifique à l'opérateur financier (acquéreur) auquel le terminal est destiné. Le terme « application » signifie du code exécutable, des paramètres passifs et des clés.

L'injection dans la mémoire du code exécutable, des paramètres passifs et des clés s'effectue dans une station de personnalisation, qui reçoit l'appareil. Lorsque l'on connecte l'appareil à la station de personnalisation, on suppose qu'il est dans un état de référence, c'est à dire dans un état logique donné.

Si l'on veut préserver la confidentialité des informations injectées dans l'appareil par la station de personnalisation, il est indispensable de s'assurer que l'appareil à personnaliser est vide de toute application malicieuse. Une application malicieuse est définie, pour les besoins de la présente demande de brevet, comme tout code exécutable et/ou données passives différents de l'état de référence dans lequel l'appareil est supposé se trouver.

Nous donnons ici quelques exemples d'applications malicieuses dans divers domaines :
- un terminal de paiement vide est manipulé par un employé malicieux qui y charge une application qui simule le comportement d'un terminal vierge. Cette application laisse une copie des clés secrètes dans une zone lisible de la mémoire non-volatile. Une fois les clés injectées, l'employé malicieux prend possession des clés injectées, grâce à la copie faite dans une zone lisible de la mémoire. Ensuite l'employé malicieux efface l'application qui simule le comportement d'un terminal vierge et reprogramme les clés volées de manière correcte dans un terminal vierge qu'il réinsère dans la chaîne de distribution; le contrôle du nombre de terminaux ne permet pas de détecter la manipulation. Ainsi l'acquéreur recevra un terminal dont il croit les clés à l'abri alors que ces clés sont connues de l'employé malicieux;
- une carte d'identité est fabriquée dans un pays A pour le compte d'un pays B. Le pays B assure la personnalisation de ces cartes, par injection de clés secrètes dans une zone de la mémoire des cartes non lisible depuis l'extérieur. La carte livrée à B peut comporter un code malicieux injecté par les autorités du pays A avant la livraison des cartes vierges au pays B. Ce code pouvant simuler vis-à-vis de la station de personnalisation un parfait comportement logiciel de carte vierge mais sauvegarder, dans un fichier caché stocké dans la mémoire lisible, des copies des clés secrètes injectées par B dans le document d'identité. Ainsi, lors d'un contrôle du document d'identité par le pays A, le code malicieux pourrait être activé, le pays A pourrait ainsi récupérer les clés mises dans la carte par le pays B et dupliquer le document d'identité; la procédure d'activation du code malicieux peut être très particulière, par exemple résulter de l'écriture dans un fichier d'une donnée spécifique provoquant le réveil du logiciel malicieux;
- une carte bancaire dans laquelle l'on doit inscrire une applet Javacard comportant des clés peut déjà contenir un code malicieux, téléchargé par un opérateur malhonnête avant la personnalisation de la carte. Ainsi, l'opérateur pourrait récupérer la carte à la fin de la personnalisation, relire ses clés, effacer le code malicieux, recharger le code légitime dans la carte (ainsi que les clés dont il vient de prendre connaissance) et réinsérer la carte dans le processus industriel afin que celle-ci ne manque pas lors du comptage final;
- de même, après avoir formaté un disque dur et y avoir installé un système d'exploitation de la marque Windows XP, il peut être utile de s'assurer que le disque dur contient bien l'image du contenu du CD officiel de Windows XP commercialisé par la société Microsoft.

Le même scénario peut se produire lors de l'initialisation de tout appareil comportant ou non des secrets (ordinateur de type PC, assistant personnel numérique ou PDA, téléphone mobile, station de jeux, terminal de paiement, décodeur de télévision à péage etc.), ou lors de l'injection sur un tel appareil d'informations - programmes, clés, données de toute nature.

On comprend que dans tous ces exemples, il est utile de pouvoir vérifier que l'état de l'appareil est conforme à un état de référence. Cette vérification peut être une vérification avant l'injection d'informations dans l'appareil : dans les exemples de la personnalisation d'une carte à puce ou d'un terminal de paiement, la vérification a pour objectif d'avérer, avant la personnalisation, la conformité de l'appareil à l'état de référence, notamment l'absence d'application malicieuse. Cette vérification peut être une vérification après l'injection d'informations dans l'appareil : la vérification a alors pour objectif d'avérer que l'appareil est porteur d'un contenu (code exécutable, paramètres, données passives) strictement conforme à un modèle donné.

L'état de la technique propose trois types de solutions permettant de s'assurer qu'un appareil informatique est porteur d'un contenu logique conforme à un modèle donné. Ces solutions peuvent être logicielles, matérielles ou invasives.

Les solutions logicielles supposent que l'appareil est conçu d'une manière telle qu'une certaine action physique sur l'appareil résultera en un comportement garanti de l'appareil. Dans l'exemple d'un ordinateur personnel de type PC, l'action physique consistant en l'appui des touches ctrl-alt-del, précédé par l'insertion d'une disquette dans le lecteur et de l'allumage de la machine résulte en un démarrage du système d'exploitation. Lorsque le BIOS (acronyme de l'anglais Basic Input/Output System, c'est-à-dire système d'entrées sorties de base) d'un ordinateur PC détecte à l'allumage la présence d'une disquette dans le lecteur de disquettes, il passe la main au programme présent sur la disquette et force ce programme à s'exécuter. Ainsi, il est possible de reformater un appareil tombée en panne ou contenant un code malicieux (tel qu'un « virus » ou un « rootkit »); ce reformatage remet l'appareil dans un état de référence donné - un état d'initialisation, dans lequel l'appareil est vide de contenu logique.

Une telle solution matérielle suppose que l'appareil permette, par une telle action physique, une prise en main privilégiée.

Lorsqu'il s'agit de vérifier que l'appareil présente un contenu logique donné, une telle solution suppose que le vérificateur puisse à nouveau écrire dans l'appareil le contenu logique souhaité. Ceci n'est pas toujours le cas. Ainsi, on trouve de nos jours des appareils dont la mémoire n'est pas constituée de ROM (mémoire morte) mais de mémoire non-volatile réinscriptible (telle que la mémoire Flash ou l'EEPROM). Par exemple, plusieurs fabricants de composants offrent des puces Flash vierges dans lesquelles le fabricant de cartes peut télécharger un système d'exploitation de son choix; des exemples de telles puces sont celles vendues par la société SST sous la référence Emosyn, par la société Atmel sous la référence, AT90SC3232, par la société Infineon sous la référence SLE88CFX4000P, ou encore par la société Electronic Marin sous la référence EMTCG. Pour ce tels appareils, l'utilisateur a la possibilité de charger sur la puce de la carte un nouvel système d'exploitation et ne peut forcer le dispositif à démarrer sur un support externe, ces puces ne ne permettent donc pas à l'utilisateur de savoir si le système d'exploitation présent à bord de la puce de la carte est conforme à un listing donné ou pas.

Les solutions invasives supposent que l'appareil à vérifier ait été démonté et que l'élément contenant le code ou données - l'élément physique assurant la fonction de mémoire - soit inspecté à l'aide d'un appareil de test externe. L'appareil de test externe permet de lire le contenu de la mémoire de l'appareil à vérifier, indépendamment du processeur de l'appareil à vérifier, et donc indépendamment de l'exécution de toute application malicieuse simulant un fonctionnement attendu. Une fois acquise une certitude sur la conformité au modèle du code contenu dans l'élément démonté, l'élément est remonté sur la machine. A titre d'exemple, le logiciel commercialisé sous la référence EnCase par la société Guidance Software permet d'auditer le contenu d'un disque dur hors d'une machine.

Une telle solution invasive est souvent hors de portée pour l'utilisateur moyen ou est simplement techniquement impossible; ainsi, une carte à puce ou un terminal de paiement est conçu d'une manière telle qu'il est impossible d'en détacher le moindre élément sans provoquer l'autodestruction de l'appareil pour des raisons de sécurité.

Les solutions logicielles consistent à dialoguer avec l'appareil à vérifier. Plusieurs approches sont actuellement utilisées mais aucune ne donne une certitude absolue quant au contenu de l'appareil vérifié. Dans toutes les approches logicielles il est supposé que l'attaquant a le droit d'altérer l'état logiciel (logique) de la machine cible mais en aucun cas il n'a le droit d'en altérer la structure physique (par exemple ajouter de la mémoire, débrancher un périphérique, remplacer le disque etc.).

Une première solution logicielle consiste à demander à l'appareil examiné de hacher la totalité ou une partie de sa mémoire. Une telle approche est insuffisante car l'on pourrait parfaitement imaginer que le code malicieux ait compressé le système d'exploitation (tout code exécutable est hautement redondant et donc propice à la compression) qu'il décompresse et hache au fur et à mesure pour répondre aux requêtes de hachage du vérificateur. Une telle solution est par exemple décrite dans l'article « Oblivious Hashing: A Stealthy Software Integrity Verification Primitive », par Yuqun Chen, Ramarathnam Venkatesan, Matthew Cary, Ruoming Pang, Saurabh Sinha et Mariusz H. Jakubowski, Proceedings of 5th International Workshop on Information Hiding, Noordwijkerhout, The Netherlands, October 2002. Lecture Notes in Computer Science, No. 2578, Springer-Verlag, 2003.

Une seconde solution consiste à signer par un algorithme de signature numérique le code initialement présent à bord de l'appareil à vérifier. Cette approche suppose que le code déjà présent à bord de l'appareil est digne de confiance. Cette solution est par exemple préconisée par le consortium Trusted Computing Group dont le site Internet est https://www.trustedcomputinggroup.org/home.

L'invention fournit une solution au problème de la vérification de la conformité d'un appareil informatique à un contenu logique ou état de référence. L'invention suppose uniquement la connaissance des spécifications matérielles de l'appareil vérifié.

Dans certains modes de réalisation, l'invention permet de s'assurer qu'un code donné est chargé de manière exacte sur un appareil dont les spécifications matérielles sont connues. Ces modes de réalisation ne supposent pas que l'appareil à vérifier contienne des secrets spécifiques, ni un code déjà supposé sûr; ils ne supposent pas non plus l'existence d'un mécanisme matériel permettant d'assurer une prise en main privilégiée de l'appareil.

Dans un mode de mise en oeuvre, l'invention propose un procédé de vérification de la conformité du contenu logique d'un appareil informatique à un contenu de référence, l'appareil informatique présentant un processeur, une mémoire dans laquelle le processeur peut lire et écrire, et un dispositif d'entrée sortie permettant un dialogue entre le processeur de l'appareil et le monde extérieur, le procédé comprenant les étapes suivantes
- envoi à l'appareil d'une demande de chargement dans la mémoire et d'exécution d'un programme de vérification P, le programme de vérification étant capable d'écrire des données dans la mémoire de l'appareil et de lire des données dans la mémoire pour les envoyer vers le dispositif d'entrée sortie;
- envoi à l'appareil d'une demande d'exécution du programme P pour saturer la mémoire disponible non occupée par le programme;
- échange de messages avec l'appareil exécutant le programme et
- vérification de la conformité du contenu logique de l'appareil en fonction des messages échangés avec l'appareil.

Dans d'autres modes de réalisation, le procédé peut présenter une ou plusieurs des caractéristiques suivantes :
- la vérification de la conformité s'effectue en fonction du contenu des messages échangés avec l'appareil;
- la vérification de la conformité s'effectue en fonction de la mesure du cadencement dans le temps des messages échangés avec l'appareil;
- le programme de vérification P comprend des instructions de lecture supplémentaires, provoquant une activité accrue sur le dispositif d'entrée sortie;
- le procédé comprend une étape de preuve de la vérification de la conformité par une technique de retour arrière appliquée au jeu d'instructions exécutable par le processeur;
- l'étape de preuve de la conformité par une technique de retour arrière comprend l'évaluation des différentes instructions candidates de manière concrète;
- l'étape de preuve de la confonnité par une technique de retour arrière comprend l'évaluation des différentes instructions candidates de manière abstraite;
- le procédé comprend une étape de preuve de la vérification de la conformité par une recherche exhaustive des programmes possibles appliquée au jeu d'instructions exécutables par le processeur;
- la demande de chargement dans la mémoire comprend une demande de chargement du programme de vérification P dans la mémoire à partir du dispositif d'entrée sortie;
- la demande de chargement dans la mémoire comprend une demande d'activation d'un programme de vérification P contenu dans l'appareil;
- l'exécution du programme P pour saturer la mémoire disponible comprend la lecture de données de bourrage depuis le dispositif d'entrée sortie et l'écriture des données de bourrage dans la mémoire;
- l'exécution du programme P pour saturer la mémoire disponible comprend la lecture d'un problème depuis le dispositif d'entrée sortie et la résolution par le programme de vérification P du problème en utilisant la mémoire disponible;
- l'exécution du programme P pour saturer la mémoire disponible comprend la lecture d'une graine depuis le dispositif d'entrée sortie et l'expansion de la graine en utilisant la mémoire disponible;
- l'échange de messages comprend :
   l'envoi à l'appareil d'une demande de lecture de données de la mémoire et
   la réception depuis l'appareil des données lues dans la mémoire, y compris le code du programme de vérification;
- le programme de vérification est capable d'exécuter une fonction sur des données de la mémoire, et l'échange de message comprend :
   l'envoi à l'appareil d'une demande d'exécution de la fonction et de lecture de données de la mémoire; et
   la réception depuis l'appareil du résultat de la fonction et du code du programme de vérification lue dans la mémoire.
- la fonction exécutée sur les données comprend le calcul de hachage des données de la mémoire autres que le code du programme de vérification;
- l'exécution du programme P pour saturer la mémoire disponible comprend la lecture d'un problème depuis le dispositif d'entrée sortie et la résolution du problème en utilisant la mémoire disponible, l'échange de message comprenant :
   l'envoi à l'appareil d'un problème; et
   la réception depuis l'appareil du résultat du problème et du code du programme de vérification lue dans la mémoire.
- le code du programme de vérification comprend des instructions de relecture du code vers le dispositif d'entrée sortie;
- l'exécution du programme de vérification provoque l'effacement de la mémoire, à l'exclusion du code du programme de vérification.

Dans un autre mode de réalisation, l'invention propose un procédé de restauration d'un appareil informatique présentant un processeur, une mémoire dans laquelle le processeur peut lire et écrire, et un dispositif d'entrée sortie permettant un dialogue entre le processeur de l'appareil et le monde extérieur, le procédé comprenant les étapes de
- sauvegarde vers le monde extérieur des données présentes dans la mémoire;
- vérification de la conformité du contenu logique de l'appareil informatique à un contenu de référence, suivant le procédé décrit plus haut;
- analyse et le cas échéant traitement des données sauvegardées et
- recopie des données analysées dans la mémoire de l'appareil.

Dans encore un autre mode de réalisation, l'invention propose un appareil informatique, comprenant un processeur, une mémoire dans laquelle le processeur peut lire et écrire, un dispositif d'entrée sortie permettant un dialogue entre le processeur de l'appareil et le monde extérieur et un programme de vérification stocké dans l'appareil, le programme de vérification comprenant des instructions adaptées à provoquer, lorsqu'il est exécuté par le processeur,
- l'écriture de données dans la mémoire de l'appareil et
- la lecture des données dans la mémoire, y-compris le code du programme de vérification, pour les envoyer vers le dispositif d'entrée sortie.

Dans un dernier mode de réalisation, l'invention propose un dispositif informatique, comprenant
- un premier sous-ensemble présentant un processeur, une mémoire dans laquelle le processeur peut lire et écrire, et un dispositif d'entrée sortie;
- un deuxième sous-ensemble, le deuxième sous-ensemble étant adapté à dialoguer avec le processeur du premier sous-ensemble à travers le dispositif d'entrée sortie et à vérifier la conformité de l'état logique du premier sous-ensemble suivant le procédé mentionnée plus haut.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une représentation schématique d'un appareil, dont l'on souhaite vérifier l'état logique;
- figure 2, un ordinogramme d'un premier exemple de mise en oeuvre du procédé de l'invention;
- figure 3, un ordinogramme d'un second exemple de mise en oeuvre du procédé de l'invention.
- figure 4, un ordinogramme d'un procédé de restauration de l'état d'un appareil informatique;
- figure 5, un schéma fonctionnel d'un dispositif à l'intérieur duquel est mis en oeuvre le procédé de la figure 2 ou 3.

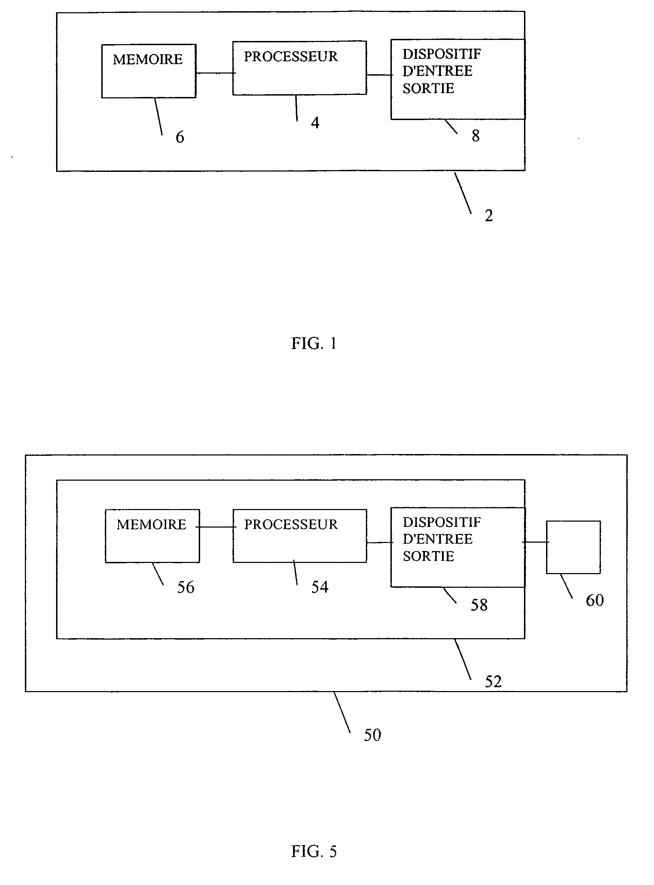

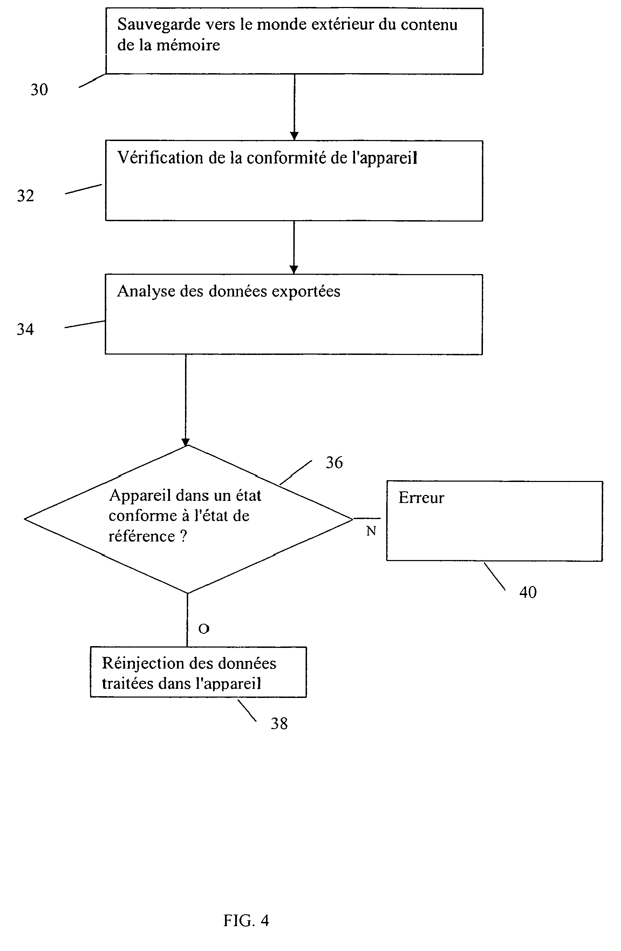

La figure 1 montre une vue schématique d'un appareil informatique. Comme expliqué plus haut, l'appareil 2 présente un processeur 4, une mémoire 6 et un dispositif d'entrée sortie 8. Le processeur 4 est capable d'écrire dans la mémoire 6 et de lire à partir de cette mémoire. Le processeur 4 est aussi capable d'exécuter du code exécutable stocké dans la mémoire 6. Le processeur 4 est encore capable de recevoir des informations depuis le dispositif d'entrée sortie et d'émettre des informations vers l'extérieur via le dispositif d'entrée sortie. On n'a représenté sur la figure 1 que les éléments fonctionnels nécessaires à la mise en oeuvre de l'invention; en particulier, l'appareil peut présenter une mémoire spécifique contenant le système d'exploitation, comme dans les puces Flash mentionnées plus haut à titre d'exemple; la mémoire 6 est donc la mémoire offerte à l'utilisateur de l'appareil pour le chargement de données, de paramètres ou de codes exécutable par le processeur.

Les différents éléments de l'appareil de la figure 1 sont des éléments fonctionnels, et diverses solutions matérielles peuvent être utilisées pour les implémenter. Pour ce qui est du processeur, on peut utiliser des processeurs du commerce, comme 68HC05 ou 80C51, ou encore les puces Flash mentionnées plus haut. Pour ce qui est de la mémoire, on peut utiliser de la mémoire Flash une mémoire magnétique ou une mémoire EEPPROM sous une forme quelconque. La forme particulière que présente le dispositif d'entrée sortie est indifférente. Dans l'exemple d'une carte à puce, le dispositif d'entrée sortie est capable de lire les signaux appliqués sur le port série de la carte; dans l'exemple d'une carte à puce sans contact, le dispositif d'entrée sortie comprend une antenne et les circuits adaptés à décoder les signaux reçus sur l'antenne. Dans l'exemple d'un terminal de paiement, les différents éléments fonctionnels de la figure 1 sont typiquement composés de d'un microprocesseur 32 bits, d'un port séries et d'une mémoire Flash.

Comme indiqué plus haut, outre une carte à puce ou un terminal de paiement, l'appareil peut être un ordinateur de type PC ou autre, un assistant numérique personnel, un terminal de télévision à péage, ou tout autre appareil présentant la structure schématique de la figure 1.

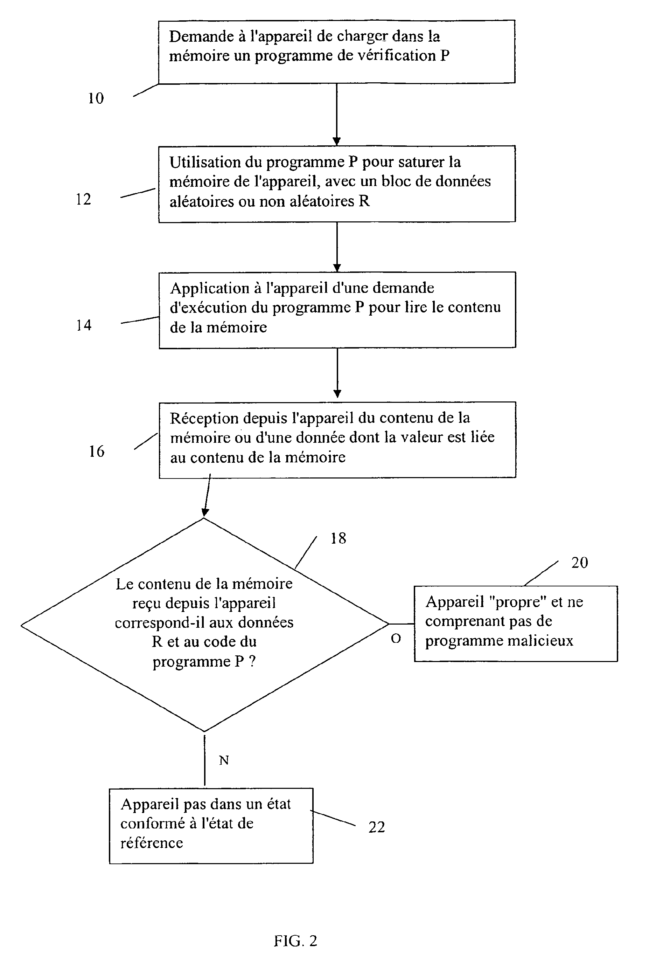

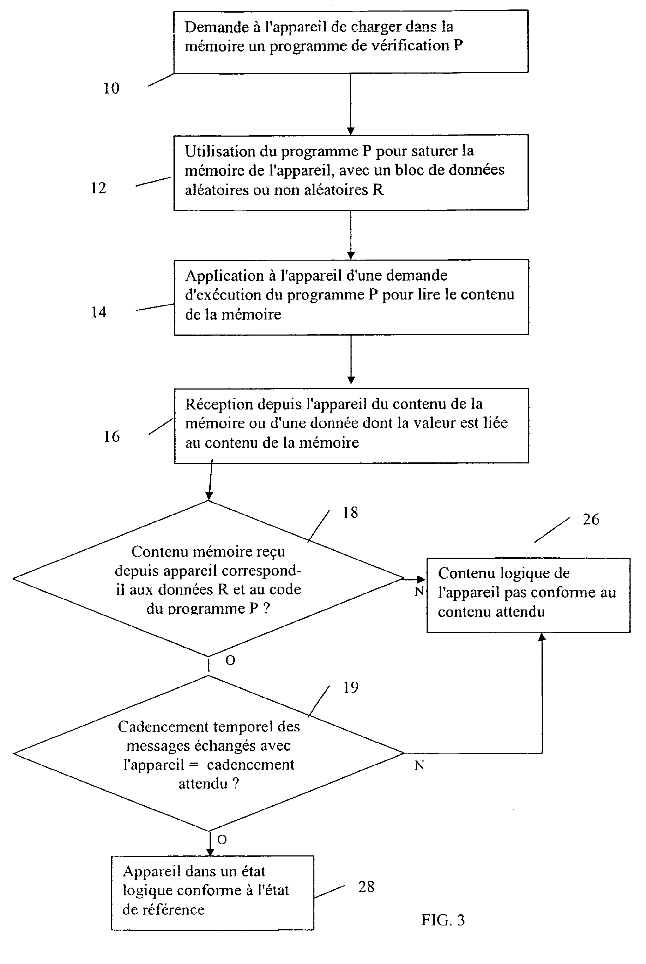

Le procédé de vérification de l'invention suppose connues les spécifications matérielles de l'appareil 2. Dans l'exemple de la figure 2, il suffit de connaître la capacité de la mémoire 6 de l'appareil. Dans l'exemple de la figure 3, le procédé nécessite de connaître aussi les caractéristiques temporelles du processeur de l'appareil, typiquement le nombre de cycles d'horloge nécessaires à l'exécution de chaque instruction.

La figure 2 est un ordinogramme d'un premier mode de mise en oeuvre du procédé de l'invention. Dans ce mode de mise en oeuvre, l'invention exploite le fait que l'exécution d'un programme malicieux, qui simulerait le fonctionnement "normal" de l'appareil 2, suppose que des ressources mémoires soient disponibles. L'invention propose donc de demander à l'appareil d'exécuter un programme de vérification apte à dialoguer avec le monde extérieur et de saturer la mémoire de l'appareil avant le dialogue. En l'absence de programme malicieux, le dialogue avec le monde extérieur s'effectuera de façon attendue; si un programme malicieux est présent et tente de simuler l'exécution du programme de vérification, l'absence de ressources mémoire conduira à ce que le dialogue avec le monde extérieur ne s'effectue pas de la façon attendue.

A l'étape 10, on demande à l'appareil 2 de charger dans la mémoire 6 un programme de vérification, noté P dans la suite, et de l'exécuter. Le chargement peut s'effectuer par le biais du dispositif d'entrée-sortie, en écrivant le programme dans la mémoire 6. On peut aussi prévoir un programme de vérification P dormant - stocké dans le dispositif vérifié par ailleurs; dans ce cas, il n'est pas nécessaire de le charger par l'intermédiaire du dispositif d'entrée-sortie et il suffit de le remonter vers la mémoire 6. Le mot "chargement" doit donc s'entendre comme couvrant non seulement une écriture dans la mémoire 6 du programme à travers le dispositif d'entrée sortie 8, mais aussi une écriture dans la mémoire 6 d'un programme déjà contenu dans l'appareil 2.

Le programme P de vérification, lorsqu'il est exécuté, permet d'écrire des données dans la mémoire 6; dans le mode de réalisation décrit en référence à la figure 2, l'écriture des données consiste à écrire dans la mémoire 6 des données reçues sur le dispositif d'entrée sortie 8. On donne plus loin d'autres modes d'écriture des données dans la mémoire.

Le programme P permet aussi, lorsqu'il est exécuté, de lire le contenu de la mémoire pour l'envoyer vers le dispositif d'entrée sortie.

A l'issue de l'étape 10, il n'existe encore aucune certitude que l'appareil a correctement chargé et exécuté le programme P. Tel est le cas si, en l'absence de tout programme malicieux, l'appareil se comporte de façon "normale". L'appareil peut comporter un programme malicieux tentant de simuler le fonctionnement "normal" : l'appareil, du fait de ce programme malicieux, peut essayer de se comporter comme si le programme P avait été chargé mais ne pas le charger correctement ou en charger seulement une partie ou encore s'abstenir de l'exécuter.

Aux étapes 12 à 18, on utilise le programme P pour entreprendre un protocole de vérification avec l'appareil. Ce protocole a pour objectif de tester le fonctionnement de l'appareil pour permettre de conclure, avec certitude que l'appareil est « propre », c'est-à-dire qu'il ne comporte pas de programme malicieux ou de conclure avec certitude que l'appareil est infecté, c'est-à-dire qu'il comporte un code malicieux.

A l'étape 12, on utilise le programme P pour saturer la mémoire 6 de l'appareil, avec un bloc de données aléatoires ou non aléatoires, noté R. La saturation consiste à remplir la mémoire 6, à l'exception de la partie de la mémoire 6 dans laquelle est stockée le programme P. Dans l'exemple de la figure 2, cette saturation s'effectue simplement en appliquant sur l'entrée sortie de l'appareil 2 des données aléatoires, notées R dans la suite; les données R sont écrites dans la mémoire 6 du fait de l'exécution du programme P. Alternativement, il n'est pas exclu que R soit constitué de données fixes et/ou non-aléatoires déjà présentes au sein de l'appareil vérifié ou de données provenant du monde extérieur.

Aux étapes 14 à 16, on échange des messages avec l'appareil à vérifier. L'étape 14 est l'application à l'appareil d'une demande d'exécution du programme P pour lire le contenu de la mémoire 6. A l'étape 16, on reçoit depuis l'appareil le contenu de la mémoire 6 ou une donnée dont la valeur est liée au contenu de la mémoire. Nous entendrons donc par « contenu de la mémoire » toute donnée dont la valeur est liée et/ou égale au contenu de la mémoire.

A l'étape 18, on compare le contenu de la mémoire 6 reçu depuis l'appareil 2 aux données aléatoires R attendues et au code du programme P et plus généralement à toute trace d'exécution normale qu'aurait résulté de l'exécution de P si les conditions étaient normales. Si le contenu de la mémoire 6 reçu depuis l'appareil correspond aux données R et au code du programme P, on conclut à l'étape 20 que l'appareil est "propre" et ne comprend pas de programme malicieux. A l'inverse, si tel n'est pas le cas, on conclut à l'étape 22 que l'appareil n'est pas dans un état conformé à l'état de référence.

La comparaison de l'étape 18 repose sur le fait que P est le seul programme capable à la fois :
- de tenir dans l'espace restant dans la mémoire après le chargement des données R et
- capable d'un comportement consistant à retourner au vérifieur extérieur les données R et le code de P.

Ce fait résulte d'une part de la saturation de la mémoire 6; un programme malicieux qui serait présent sur l'appareil pour simuler son fonctionnement normal devrait utiliser une partie de la mémoire 6; il devrait donc simuler le chargement dans la mémoire des données R, pour ensuite les restituer. Or ceci est d'autant plus difficile que les données R sont aléatoires, comme mentionné plus haut, ou pseudo-aléatoires. Au cas où les données R ne seraient pas aléatoires le vérifieur devrait s'assurer (prouver à lui-même) ou faire l'hypothèse qu'un potentiel programme malicieux est incapable de simuler la restitution correcte de ces données non aléatoires.

Ceci résulte ensuite de la taille du programme P. Il est avantageux que le programme P présente une taille aussi faible que possible, pour rendre impossible en pratique l'écriture d'une programme simulant son fonctionnement. Dans l'exemple proposé plus loin, le programme P présente une taille de 23 octets. Une taille de moins de 50 octets constitue en pratique une taille faible, rendant extrêmement difficile, voire impossible l'écriture d'un programme ayant le même fonctionnement.

Enfin ceci résulte du fait que l'échange de messages avec l'appareil comprend aussi la lecture du code du programme P.

Ainsi, du fait de la saturation de la mémoire disponible, un programme malicieux ne peut pas disposer des ressources mémoire nécessaires pour simuler le fonctionnement "normal" de l'appareil dans les différentes étapes du procédé de la figure 2.

Un premier exemple de programme P est donné ci-dessous. Ce programme est écrit en assembleur 68HC05.

### Example1.asm

| | | | |
|---|---|---|---|
| portA | equ | $80 | ; I/O port location |
| ddrA | equ | $81 | ; data direction register (ddr) location |
| | | | |
| | org | $0080 | ; program starts at address 0x80 |
| | dw | $0000 | ; initialise ddr in input mode |
| start: | clr | ddra | ; ddr in input mode upon reset |
| | ldx | portA | ; read command |
| | beq | read | ; if command is zero then read all code out |
| write: | | | ; else fill memory with incoming data |
| | lda | portA | ; read byte presented by external world |
| | sta | portA,X | ; store it at location X |
| | bra | start | ; ask for next byte |
| read: | com | ddra | ; if command nonzero make portA output |
| L1: | lda | portA,X | ; load code value, no need to set X=0 (done) |
| | sta | portA | ; send it out |
| | incx | | ; increment index |
| | bne | L1 | ; from program first byte to last |
| | bra | start | ; from program first byte to last |
| | org | $1ffE | ; |
| | | | |
| | dw | start | ; indicate to chip where program starts |

Tant que la commande appliquée est nulle, le programme procède à la lecture de la mémoire - y compris la lecture de son propre code. Si la commande n'est pas nulle, le programme écrit dans la toute la mémoire disponible, en dehors de la position qu'il occupe. Le procédé de l'invention est donc mis en oeuvre :
- en demandant à l'appareil d'exécuter de charger le programme Exemple1.asm ci-dessus dans sa mémoire puis de l'exécuter;
- en appliquant une commande non nulle et des données de bourrage en quantité suffisante pour remplir la mémoire disponible (le vérifieur peut éviter un tel chargement à partir du moment où il vérifie que les données R déjà présentes à bord ne permettent pas à un programme malicieux de simuler un comportement correct - sous réserve d'une telle preuve ou d'une telle hypothèse des données R déjà présentes à bord peuvent être utilisées); on rappelle ici que l'on est supposé connaître les spécifications matérielles de l'appareil, notamment la taille mémoire;
- en appliquant une commande nulle pour provoquer la lecture de l'ensemble des données contenues dans la mémoire.

A l'exécution, ce programme Exemple1.asm produira la suite 00FF3F81 BE802706 B680E780 20F43381 E680B780 5C26F920 E9 {bloc aléatoire R}

L'exemple proposé ci-dessus montre qu'il est possible de générer des codes ayant le fonctionnement requis et retournant à la lecture les informations attendues.

Le procédé décrit en référence à la figure 2 présente l'avantage de n'impliquer que la connaissance de la capacité de la mémoire 6 de l'appareil 2, de sorte à assurer une saturation de la mémoire. Si l'on connaît aussi les caractéristiques temporelles du processeur 4 de l'appareil, on peut aussi mesurer le temps - en nombre de cycles d'horloges du processeur - nécessaire pour retourner les données R ainsi que le code du programme P.

Ainsi le vérifieur peut chronométrer le nombre de cycles d'horloge séparant le retour des différents octets composant la donnée retournée « R et le code de P » et ne conclure que l'appareil M est « propre » que si les octets de la donnée « R et le code de P » sont retournés au rythme prévisible, étant données les spécifications du processeur de l'appareil M.

La figure 3 montre le procédé correspondant; la figure 3 est identique à la figure 2, à l'exception de l'étape 19, de vérification du cadencement temporel des messages échangés avec l'appareil. Si le cadencement des messages n'est pas celui attendu, le vérificateur conclut à l'étape 26 que le contenu logique de l'appareil n'est pas conforme au contenu attendu. Sinon, l'appareil est dans un état logique conforme à l'état de référence (étape 28). Dans la représentation de la figure 3, l'étape 19 de vérification du cadencement des messages échangés avec l'appareil suit l'étape 18. Il ne s'agit que d'une représentation schématique, l'ordre des vérifications étant sans incidence.

Cette vérification du cadencement des échanges rend encore plus difficile la simulation du comportement du programme P par un programme malicieux.

En outre, il est possible de prouver de manière formelle en utilisant une technique dite de *backtracking* (ou retour arrière en langue française) qu'un code donné est le seul capable de restituer au vérifieur R et son propre code en un délai et/ou un rythme précis. Cette technique de *backtracking* est connue en soi par l'homme du métier et est décrite par exemple dans :
http://www.cis.upenn.edu/~matuszek/cit594-2002/Pages/backtracking.html; elle n'est donc pas décrite plus en détail. Alors que la certitude de la conformité est empirique dans le procédé de la figure 2, le procédé de la figure 3 permet une démonstration formelle de l'impossibilité de fournir un programme malicieux simulant le fonctionnement du programme de vérification P.

Afin de faciliter cette preuve, il est avantageux de parsemer la boucle de relecture d'octets d'instructions supplémentaires de retour d'octets ayant pour but de contraindre davantage tout programme malicieux, comme illustré dans l'exemple suivant :

| | | | | | |
|---|---|---|---|---|---|
| L1: | LDA | PORTA,X | ; | LOAD CODE VALUE | 4 CYCLES |
| | STA | PORTA | ; | SEND IT OUT | 4 CYCLES |
| | INCX | | ; | INCREMENT INDEX | 3 CYCLES |
| | BNE | L1 | ; | | 3 CYCLES |

Le fragment de code précédent retourne un octet chaque 14 cycles machine. La démonstration formelle utilisable dans le procédé de la figure 3 consiste à prouver qu'aucune séquence d'instructions de 14 cycles au plus est capable de générer la séquence attendue en temps et en heure.

Pour rendre encore plus difficile la réalisation d'un programme malicieux - ou simplifier la démonstration formelle, on peut en outre parsemer la boucle de relecture avec des opérations de retour d'informations afin de réduire cette durée de 14 cycles séparant l'envoi des caractères successifs de la séquence « R et code de P » autant que possible. Par exemple :

| | | | | | | |
|---|---|---|---|---|---|---|
| L1: | COM | PORTA | ; | AMELIORATION DELAIS | 5 | CYCLES |
| | LDA | PORTA,X | ; | LOAD CODE VALUE | 4 | CYCLES |
| | STA | PORTA | ; | SEND IT OUT | 4 | CYCLES |
| | INCX | | ; | INCREMENT INDEX | 3 | CYCLES |
| | STX | PORTA | ; | AMELIORATION DELAIS | 4 | CYCLES |
| | BNE | L1 | ; | | 3 | CYCLES |

Dans cet exemple, on remarque que le programme malicieux ne dispose plus que 8, 7 ou 8 cycles pour générer chacun des octets la séquence « R et code de P ». Ceci permet d'explorer de manière automatisée les codes permettant de générer des séquences et cribler ces codes l'un après l'autre par le biais d'un procédé dit de *backtracking,* dans la mesure où l'on souhaite disposer d'une vérification formelle de l'impossibilité de construire un code malicieux.

L'on notera qu'il ne s'agit pas de recherche exhaustive de tous les codes possibles car dès qu'un code C s'écarte des contraintes de temps imposées tous les codes plus longs ayant C comme fragment ou préfixe sont éliminés.

On peut, pour la vérification par *backtracking,* évaluer les différentes instructions candidates de manière concrète ou abstraite (symbolique). Les avantages d'une évaluation concrète sont une plus grande facilité de programmation. Les avantages d'une vérification symbolique sont une plus grande efficacité malgré une plus grande complexité de programmation.

L'annexe 1 à la présente description présente le code source d'une procédure de preuve de code permettant un procédé de *backtracking* adapté spécialement à la présente invention.

L'annexe 2 à la présente description donne, pour l'exemple de programme Exemple1.asm parsemé d'instructions de lecture supplémentaires, le comportement attendu par l'appareil.

La preuve de la vérification de la conformité peut utiliser une recherche exhaustive appliquée au jeu d'instructions exécutables par la plateforme vérifiée; on détermine alors l'ensemble des codes possibles présentant la taille requise et on procède au test de ces codes pour prouver qu'ils ne sont pas adaptés à fournir les messages échangés avec l'appareil; cette preuve s'applique au procédé de la figure 2, dans lequel la vérification s'effectue en fonction du contenu des messages échangés avec l'appareil; cette technique s'applique encore au procédé de la figure 3, dans lequel la vérification s'effectue aussi en en fonction de la mesure du cadencement dans le temps des messages échangés avec l'appareil.

Les annexes 3 et 4 montrent les codages des différentes instructions à 7 cycles et à 8 cycles, possibles pour un jeu d'instructions correspondant à l'assembleur 68HC05. Ces différentes instructions à 7 et 8 cycles peuvent être utilisées pour une preuve de la vérification de la conformité par recherche exhaustive, lorsque le programme est parsemé d'instructions de relecture conduisant à 7 ou 8 cycles disponibles pour le programme malicieux, comme dans l'exemple proposé plus haut.

L'annexe 5 montre un autre exemple du code du programme de vérification P; l'annexe ne montre que la partie du programme permettant la relecture de valeurs, la partie de placement de valeur dans la mémoire vérifiée ayant été enlevée pour plus de clarté.

Les procédés proposés en référence aux figures 2 et 3 permettent une vérification de la conformité du contenu logique de l'appareil. Ces procédés impliquent toutefois une saturation de la mémoire, par application au dispositif d'entrée sortie des données R de saturation. Une telle solution ne pose pas de problème particulier lorsque la capacité de la mémoire 6 est suffisamment faible, par rapport au débit du dispositif d'entrée sortie. Les procédés des figures 2 et 3 sont donc facilement utilisables pour des appareils tels des cartes à puce. Si la capacité de la mémoire est trop importante - par exemple une mémoire en méga-octets ou en giga-octets sur un ordinateur, on peut avantageusement utiliser l'une des solutions suivantes pour l'étape de saturation de la mémoire.

Une première solution consiste à fournir à l'appareil, en lieu et place de données de saturation, l'énoncé d'un problème à résoudre, la résolution du problème conduisant à la saturation de la mémoire. A titre d'exemple de tels problèmes, on peut mentionner les problèmes dits SPACE-COMPLETS. Par exemple de tels problèmes sont cités dans l'article « Moderately Hard, Memory-bound Functions » par Martin Abadi, Mike Burrows, Mark Manasse et Ted Wobber ou encore dans l'article « On Memory-Bound Functions for Fighting Spam » par Cynthia Dwork, Andrew Goldberg et Moni Naor.

Le problème exploité dans le second article implique le calcul de collisions, et donc l'occupation d'une capacité mémoire dont la taille peut être fixée en fonction d'un paramètre. L'énoncé du problème mesure quant à lui uniquement quelques octets. On comprend que l'énoncé du problème est "court", au regard de la taille de la mémoire 6.

Une deuxième solution consiste à appliquer à l'appareil une graine courte d'une donnée à expanser par le programme P, la donnée expansée permettant de saturer la mémoire. Le processus d'expansion est de préférence tel qu'il n'y ait pas moyen d'expanser la donnée autrement qu'en occupant l'intégralité de la mémoire disponible.

On peut aussi panacher les différentes solutions proposées ci-dessus et en référence à la figure 2.

Une troisième solution consiste à ne pas saturer la mémoire et travailler avec des données déjà présentes à bord de la plateforme vérifiée (ces données pouvant être selon les cas, du code exécutable déjà présent à bord (code d'applications légitimes) et/ou des données passives légitimes). Dans ce cas, le vérifieur peut de préférence au préalable prouver ou supposer que la restitution de ces données déjà présentes à bord de la plateforme vérifiée par le programme P lors de la phase de vérification ne peut être simulée par un programme malicieux (avec ou sans contraintes de cadencement temporel). Une telle preuve est toujours possible à obtenir par une technique de *backtracking*.

Ces solutions permettent de limiter la durée de l'étape de saturation de la mémoire par le programme P ou éviter le rechargement de données déjà présentes à bord. Dans les cas où les données de saturation proviennent, au moins au départ, du monde extérieur (fourniture du problème, fourniture de la graine), il reste impossible à un programme malicieux de prévoir à l'avance la solution et d'éviter ainsi la saturation de la mémoire. Ces solutions supposent toutefois que le programme P est plus complexe que le programme Example1.asm proposé plus haut.

Notons enfin, qu'en lieu et place de la donnée aléatoire il est également possible d'utiliser à la place de R une donnée fixe et non confidentielle et dans ce cas prouver que le comportement de la plate-forme est caractérisable sans ambigüité.

Les procédés des figures 2 et 3 impliquent aussi une étape 16 de lecture du contenu de la mémoire. Comme pour l'écriture dans la mémoire, cette solution ne pose pas de problème particulier lorsque la capacité de la mémoire 6 est suffisamment faible, par rapport au débit du dispositif d'entrée sortie. On peut néanmoins utiliser l'une des solutions suivantes pour rendre plus rapide l'échange entre l'appareil et le monde extérieur.

Une première solution consiste à procéder, au lieu de la lecture des données aléatoires ou pseudo-aléatoires de saturation, à un calcul de hachage ou à un calcul de CRC sur ces données. Dans la mesure où les données sont aléatoires ou pseudo-aléatoires, la compression mentionnée dans la description de la solution logicielle de l'état de la technique est impossible ou très difficile.

On peut aussi proposer la solution suivante : n blocs de bourrage aléatoires ou pseudo-aléatoires sont reçus du monde extérieur; ces données sont placées dans la mémoire 6 par le programme P. Cette étape 12 de saturation de la mémoire est suivie par une indication par le monde extérieur d'une permutation des n éléments et par le retour par le programme P du haché des données permutées au monde extérieur. Ainsi, même si le programme malicieux connaît le type de hachage à appliquer, il lui est impossible de calculer le haché lors de la réception des blocs de bourrage.

Ces solutions permettent de limiter la durée de l'étape de lecture depuis la mémoire par le programme P. Dans la mesure où le calcul du CRC, du haché ou le calcul du résultat implique de disposer des données de saturation dans leur ensemble, il reste impossible à un programme malicieux de prévoir à l'avance la solution et d'éviter ainsi la saturation de la mémoire. Le retour des informations vers le monde extérieur est toutefois plus rapide, puisqu'il suffit de transmettre {le résultat du calcul sur les données R + le code de P} au lieu de transmettre {les données R + le code de P}

On peut aussi panacher les différentes solutions proposées ci-dessus et en référence à la figure 2. On comprend aussi que l'on peut mélanger les solutions limitant la durée d'écriture dans la mémoire et les solutions limitant la durée de lecture des données depuis la mémoire.

On ne décrit pas ici la suite du procédé de vérification ni ses applications. Dans l'exemple des appareils à personnaliser, une vérification de la conformité de l'appareil est suivie de la personnalisation, alors qu'un appareil qui s'avère non conforme est rejeté. Une fois l'appareil vérifié, on peut utiliser pour la personnalisation la capacité du programme P à écrire dans la mémoire 6 de l'appareil.

Le procédé des figures 2 et 3 s'applique notamment lorsque la mémoire n'est pas supposée contenir de code ou lorsque la mémoire contient un code connu pouvant être restauré sans problème à la fin du procédé de vérification.

On peut aussi prévoir que le programme P commence par effacer de la mémoire toutes les données présentes, à l'exclusion de son propre code puis entreprendre la réception de données du monde extérieur.

On peut aussi prévoir que le programme P laisse en place les données présentes, mais communique ces dernières au vérifieur qui fera la preuve qu'il est possible de conduire l'épreuve sans ambigüité avec ces données en lieu et place des données aléatoires.

On peut aussi prévoir, avant l'étape de saturation de la mémoire, une sauvegarde des données contenues dans la mémoire - ou d'une partie de celles-ci en transmettant temporairement ces données au monde extérieur. La conformité des données sauvegardées peut être analysée en dehors de l'appareil; les données sauvegardées, si elles sont conformes, peuvent ensuite être restaurées dans l'appareil vérifié; de nouveau, on peut utiliser le programme P pour la restauration des données à l'issue de la vérification de la conformité. L'invention permet alors une restauration d'un appareil informatique. La figure 4 montre un tel procédé, appliqué à un appareil du genre de la figure 1 : la première étape 30 est une étape de sauvegarde vers le monde extérieur du contenu de la mémoire; elle est suivi d'une étape 32 de vérification de la conformité, suivant le procédé décrit plus haut; à l'étape 34, on analyse les données exportées et, le cas échéant on les traite, par exemple si elles contiennent un programme malicieux. Si l'appareil est dans un état conforme à l'état de référence (étape 36), on y réinjecte les données traitées (étape 38). Si l'appareil vérifié n'est pas dans un état conforme à l'état de référence, on signale une erreur (étape 40); on peut alors prendre les mesures correctrices nécessaires (réinitialisation ou autres).

Il est également possible de modifier ou généraliser le procédé décrit dans la présente invention des manières suivantes :
- Une première généralisation consiste, au lieu d'écrire les données R d'une traite et les relire d'une traite, d'alterner des écritures et lectures de manière répétée. Ainsi un premier bloc de données R[1] serait écrit, un premier bloc R'[1] serait relu, puis un second bloc de données R[2] serait écrit, un second bloc R'[2] serait relu et ainsi de suite. Ici R'[i] note soit une valeur qui doit être égale à R[i] ou une valeur qui est fonction de R[i].
- Une seconde variante peut être de répéter le protocole de vérification avec la machine plusieurs fois et d'accepter la machine comme propre qu'en cas de réussite dans toutes les sessions du protocole. Une telle répétition ayant pour but de réduire de manière exponentielle la probabilité qu'une application malicieuse passe le protocole par pure chance.
- Une troisième variante remplace la preuve par backtracking par toute autre forme de preuve, par exemple la recherche exhaustive (ou la construction) du plus petit code (appelons m la taille de ce code) capable de restituer une donnée de la taille de R moins m octets.

On a décrit en référence aux figures 2 et 3 une vérification d'un appareil depuis le monde extérieur, en référence à un "vérificateur" ne faisant pas partie de l'appareil. Le procédé de l'invention s'applique aussi à l'intérieur d'un même dispositif, entre deux circuits, deux sous-systèmes ou deux composants faisant partie du dispositif; dans ce cas, l'un des deux circuits, sous-systèmes ou composants se comporte comme le "monde extérieur" ou comme le "vérificateur" pour l'autre circuit, sous-système ou composant. Cet autre circuit, sous-système ou composant se comporte alors comme l'appareil à vérifier décrit plus haut : il doit donc comprendre un processeur, une mémoire, ainsi qu'un dispositif d'entrée-sortie permettant de dialoguer avec l'autre sous-ensemble. La figure 5 montre un tel dispositif 50. Les éléments du premier sous-ensemble sont repérés par les numéros de référence de la figure 1, augmentés de 50. Le deuxième sous-ensemble est référencé 60; il n'est pas décrit plus en détails.

En d'autres termes, on exécute de manière interne au dispositif le procédé mentionné plus haut. Ceci peut être effectué entre deux sous-ensembles du dispositif ou entre plus de deux sous-ensembles, suivant des permutations souhaitées; on peut exécuter le procédé de manière invisible pour l'utilisateur du dispositif, périodiquement ou dans des circonstances particulières. En cas de non-conformité, on peut alors provoquer une ou plusieurs actions, comme par exemple un arrêt des fonctions du dispositif, ou encore un message à l'utilisateur ou au monde extérieur.

A titre d'exemple, on pourrait utiliser le procédé de l'invention dans une machine multi-processeur, telle qu'un PC, un terminal de paiement, un décodeur de télévision à péage, un élément électronique embraqué d'une arme ou d'ou véhicule militaire, chacun des processeurs constituant le "monde extérieur" pour la vérification de l'autre processeur.

### ANNEXE 1

### Algorithme de backtracking écrit en langage Mathematica

L'algorithme explore les codes de taille MSZ=21 octets (à titre d'exemple) et suppose un jeu d'instructions 68HC05 restreint aux instructions INCA, LDA, STA et BNE, port d'entrée à 0x00, porte de sortie à 0x01
q:=Function[x,Mod[x,256]];
MSZ=21;
s:=Function[x,Mod[x,MSZ]];
(* cette fonction initialise l'état de la mémoire à -1 (-1 signifiant par convention valeur indéfinie) sauf le port se trouvant à l'adresse 0 qui est initialisé à 0 *) M=Prepend[Table[-1,{n,1,MSZ-1}],0] ;
(*valeurs de 4 opcodes*) BNE=16^^26; LDA=16^^B6; INC=16^^4C;
STA=16^^B7;
(*fonction retournant le contenu d'une case mémoire *)
RM:=Function[x,M[[s[x]+1]]];
(*fonction assignant une valeur à une case mémoire*)
SM:=Function[{x,v},M[[s[x]+1]]=v];
(* fonction vérifiant la compatibilité du contenu de la machine avec une hypothèse de code faite par l'algorithme de backtracking*)
NC:=Function[{pt,lst},Sum[If[lst[[d+1]]≠ RM[s[pt+d]]&& RM[s[pt+d]]≠-1 ,1,0],{d,0,Length[lst]-1}]≠0];
(*fonction assignant une série de valeurs à la mémoire*)
SetM:=Function[{pt,v1},For[b=1,b≤ Length[v1],SM[s[pt+b-1],vl [[s[b]]]];b++]];
(*fonction assignant des valeurs aux registres du microprocesseur*)
SetRegs:=Function[{va,pt},A=q[va];Z=If[A□0,1,0];PC=s[pt];SM[1,A]];
(*fonction de décodage d'adresses relatives pour l'instruction de saut*)
dec:=Function[j,2+j-If[j≤ 16^^7F,0,256]];
(*fonction testant si l'état de la mémoire est compatible avec l'hypothèse de fragment d'instructions de la forme INCA STA 1*) INCT:=Function[U, q[Ex-1]≠ A∥NC[PC,{INC,STA,1}]]
(*modélisation de l'effet d'un fragment d'instruction de type INCA STA 1*)
INCS:=Function[U,SetM[PC,{INC,STA,1}];A=Ex;Z=If[A□0,1,0];PC-s[PC+3]; SM[1,A];]
(*même démarche que précédemment pour un fragment de type LDA m STA 1 *) LDAT:=Function[U,
NC[PC,{LDA,U,STA,1}]∥
If[MemberQ[{PC,s[PC+1],s[PC+2],s[PC+3]},s[U]], Ex≠
Pick[{LDA,U,STA,1},{PC,s[PC+1],s[PC+2],s[PC+3]},s[U]][[1]], RM[U]≠Ex && RM[U]≠-1]];
LDAS:=Function[U,
SetM[PC, {LDA,U,STA,1}];
If [Not[MemberQ[{PC,s[PC+1],s[PC+2],s[PC+3]},s[U]]] ,SM[U,Ex]];
A=RM[U];Z=If[A□0,1,0];PC=s[PC+4]; SM[1,A];]
(*modélisation de l'effet d'un fragment d'instruction de type BNE Lable STA 1 *)
BRAT:=Function[L,(Ex≠ A∥NC[PC,{BNE,L}])∥ If [Z==1,NC[s[PC+2],{STA,1}],
NC[s[PC+dec[L]],{STA,1}]∥16^^FE≤ L≤ 16^^FF]];
BRAS:=Function[L,
SetM[PC,{BNE,L}];
SetM[If[Z□1,s[PC+2],s[PC+dec[L]]], {STA,1}];
Z=If[A□0,1,0];A=Ex;SM[1,A];PC=s[PC+If[Z□1,4,dec[L]+2]]];
(*modélisation de l'effet d'un fragment d'instruction de type STA m STA 1*)
STAT:=Function[U,
NC[PC,{STA,U,STA,1}] ∥ A≠Ex ∥ s[U]=1 ∥ (s[U]□s[PC+2] && A≠STA) ∥
(s[U]□s[PC+1] && A≠1)];
STAS :=Function[U,
SetM[PC, {STA,U,STA,1}];
SM[U,Ex]; Z=If[A□0,1,0];A=Ex;PC=s[PC+4];SM[1,Ex];];
(* lecture du fichier contenant les valeurs attendues d'une plateforme légitime et leur cadencement dans le temps, fichier donné plus bas*)
ExList=Drop[Drop[<<file.m,1],1] ;
(* lecture des fichiers contenant tous les fragments dont l'exécution peut prendre 7 ou 8 cycles, fichiers donnés plus bas*)
Try[7]=<<try7.txt ;Try[8]=<<try8.txt;S[8]=Length[Try[8]];S[7]=Length[Try[7]];
(* Isolation des valeurs attendues dans une table EV=Expected Values et des valeurs de cadencement temporel TM=Timing*)
TM=Table[ExList[[h,2]],{h,1,Length[ExList]}];
EV=Table[ExList[[h,1]],{h,1,Length[ExList]}];
(*Initialisation d'une liste GS contenant l'état de l'hypothèse explorée*)
For[h=1,h≤ Length[ExList],GS[h]=1;PL[h]=0;h++];
(*cette fonction génère l'état correspondant à une liste GS donnée*)
ReRun:=Function[idd, PC=PCx;A=Ax;Z=Zx;M=Prepend[Table[-1,{n,1,MSZ-1}],0];
For[c=1,c≤idd, Ex=EV[[c]]; ExecInst[Try[TM[[c]]][[GS[c]]]]; c++]];
(*fonction traduisant une instruction en une fonction de test*)
TestInst:=Function[hy,Pick[{INCT,LDAT,BRAT,STAT},{"INC","LDA","BRA","S TA"},hy[[1]]][[1]][hy[[2]]]]
(*fonction traduisant une instruction en une fonction d'exécution*)
ExecInst:=Function[hy,Pick[{INCS,LDAS,BRAS,STAS},{"INC","LDA","BRA","S TA"},hy[[1]]][[1]][hy[[2]]]]
(*fonction de passage de retenue sur les index de fragment de code*)
Uniformize:=Function[,For[h=Length[ExList],h≠1,
If[GS[h]□S[TM[[h]]] +1,GS[h-1]++;GS[h]=1]; h--]];
(*boucle de backtracking*)
For[Zx=1, Zx≤ 2,For[Ax=0,Ax≤ 255,For[PCx=8,PCx≤ MSZ-1,
(****************)
PC=PCx; A=Ax; Z=Zx;
ID=1; Label[yyy]; Ex=EV[[ID]];CY=TM[[ID]]; HY=Try[CY][[GS[ID]]];
If[Not[TestInst[HY]], ExecInst[HY]; ID++;Goto[yyy],
If[GS[ID]<S[CY],GS[ID]++; Goto[yyy]]];
PL[ID-1]++; GS[ID]=1; GS[ID-1]++;ID--; Uniformize[]; ReRun[ID-1];
Goto[yyy]; Label[zzz];
(****************)
PCx++];Ax++];Zx++];

### ANNEXE 2

### Codage du comportement attendu par la plateforme (fichier file.m)

{{0,4},{0,7},{0,7},{1,7},{1,8},{1,7},{1,7},{1,7},{2,7},{2,8},{2,7},{183,7},{2,7},{3,7},{3,8},{3,7},{1,7},{3,7},{4,7},{4,8},{ 4,7},{182,7},{4,7},{5,7},{5,8},{5,7},{5,7},{5,7},{6,7},{6,8},{6,7},{183,7},{6,7},{7,7},{7,8},{7,7},{1,7},{7,7},{8,7},{8,8},{ 8,7},{182,7},{8,7},{9,7},{9,8},{9,7},{5,7},{9,7},{10,7},{10,8),{10,7},{183,7},{10,7},{11,7},{11,8},{11,7},{1,7},{11,7},{12 ,7},{12,8},{12,7},{76,7},{12,7},{13,7},{13,8},{13,7},{183,7},{13,7},{14,7},{14,8},{14,7},{1,7},{14,7},{15,7},{15,8},{15,7 },{183,7},{15,7},{16,7},{16,8},{16,7},{5,7},{16,7},{17,7},{17,8},{17,7},{183,7},{17,7},{18,7},{18,8},{18,7},{1,7},{18,7}, {19,7},{19,8},{19,7},{38,7},{19,7},{20,7},{20,8},{20,7},{237,7},{20,7},{21,7},{21,8},{21,7},{0,7},{21,7},{22,7},{22,8},{2 2,7},{22,7},{22,7},{23,7},{23,8},{23,7},{183,7},{23,7},{24,7},{24,8},{24,7},{1,7},{24,7},{25,7},{25,8},{25,7},{182,7},{25 ,7},{26,7},{26,8},{26,7},{26,7},{26,7},{27,7},{27,8},{27,7},{183,7},{27,7},{28,7},{28,8},{28,7},{1,7},{28,7},{29,7},{29,8 },{29,7},{182,7},{29,7},{30,7},{30,8},{30,7},{5,7},{30,7},{31,7},{31,8},{31,7},{183,7},{31,7},{32,7},{32,8},{32,7},{1,7}, {32,7},{33,7},{33,8},{33,7},{76,7},{33,7},{34,7},{34,8},{34,7},{183,7},{34,7},{35,7},{35,8},{35,7},{1,7},{35,7},{36,7},{3 6,8},{36,7},{183,7},{36,7},{37,7},{37,8},{37,7},{5,7},{37,7},{38,7},{38,8},{38,7},{183,7},{38,7},{39,7},{39,8},{39,7},{1, 7},{39,7},{40,7},{40,8},{40,7},{38,7},{40,7},{41,7},{41,8},{41,7},{237,7},{41,7},{42,7},{42,8},{42,7},{0,7},{42,7},{43,7} ,{43,8},{43,7},{43,7},{43,7},{44,7},{44,8},{44,7},{183,7},{44,7},{45,7},{45,8},{45,7},{1,7},{45,7},{46,7},{46,8},{46,7},{ 182,7},{46,7},{47,7},{47,8},{47,7},{47,7},{47,7},{48,7},{48,8},{48,7},{183,7},{48,7},{49,7},{49,8},{49,7},{1,7},{49,7},{5 0,7},{50,8},{50,7},{182,7},{50,7},{51,7},{51,8},{51,7},{5,7},{51,7},{52,7},{52,8},{52,7},{183,7},{52,7},{53,7},{53,8},{53 ,7},{1,7},{53,7},{54,7},{54,8},{54,7},{76,7},{54,7},{55,7},{55,8},{55,7},{183,7},{55,7},{56,7},{56,8},{56,7},{1,7},{56,7}, {57,7},{57,8},{57,7},{183,7},{57,7},{58,7},{58,8},{58,7},{5,7},{58,7},{59,7},{59,8},{59,7},{183,7},{59,7},{60,7},{60,8},{ 60,7},{1,7},{60,7},{61,7},{61,8},{61,7},{38,7},{61,7},{62,7},{62,8},{62,7},{237,7},{62,7},{63,7},{63,8},{63,7},{0,7},{63, 7},{64,7},{64,8},{64,7},{64,7},{64,7},{65,7},{65,8},{65,7},{183,7},{65,7},{66,7},{66,8},{66,7},{1,7},{66,7},{67,7},{67,8} ,{67,7},{182,7},{67,7},{68,7},{68,8},{68,7},{68,7},{68,7},{69,7},{69,8},{69,7},{183,7},{69,7},{70,7},{70,8},{70,7},{1,7}, {70,7},{71,7},{71,8},{71,7},{182,7},{71,7},{72,7},{72,8},{72,7},{5,7},{72,7},{73,7},{73,8},{73,7},{183,7},{73,7},{74,7},{ 74,8},{74,7},{1,7},{74,7},{75,7},{75,8},{75,7},{76,7},{75,7},{76,7},{76,8},{76,7},{183,7},{76,7},{77,7},{77,8},{77,7},{1, 7},{77,7},{78,7},{78,8},{78,7},{183,7},{78,7},{79,7},{79,8},{79,7},{5,7},{79,7},{80,7},{80,8},{80,7},{183,7},{80,7},{81,7 },{81,8},{81,7},{1,7},{81,7},{82,7},{82,8},{82,7},{38,7},{82,7},{83,7},{83,8},{83,7},{237,7},{83,7},{84,7},{84,8},{84,7}, {0,7},{84,7},{85,7},{85,8},{85,7},{85,7},{85,7},{86,7},{86,8},{86,7},{183,7},{86,7},{87,7},{87,8},{87,7},{1,7},{87,7},{88 ,7},{88,8},{88,7},{182,7},{88,7},{89,7},{89,8},{89,7},{89,7},{89,7},{90,7},{90,8},{90,7},{183,7},{90,7},{91,7},{91,8},{91 ,7},{1,7},{91,7},{92,7},{92,8},{92,7},{182,7},{92,7},{93,7},{93,8},{93,7},{5,7},{93,7},{94,7},{94,8},{94,7},{183,7},{94,7 },{95,7},{95,8},{95,7},{1,7},{95,7},{96,7},{96,8},{96,7},{76,7},{96,7},{97,7},{97,8},{97,7},{183,7},{97,7},{98,7},{98,8}, {98,7},{1,7},{98,7},{99,7},{99,8},{99,7},{183,7},{99,7},{100,7},{100,8},{100,7},{5,7},{100,7},{101,7},{101,8},{101,7},{1 83,7},{101,7},{102,7},{102,8},{102,7},{1,7},{102,7},{103,7},{103,8},{103,7},{38,7},{103,7},{104,7},{104,8},{104,7}{23 7,7},{104,7},{105,7},{105,8},{105,7},{0,7},{105,7},{106,7},{106,8},{106,7},{106,7},{106,7},{107,7},{107,8},{107,7},{18 3,7},{107,7},{108,7},{108,8},{108,7},{1,7},{108,7},{109,7},{109,8},{109,7},{182,7},{109,7},{110,7},{110,8},{110,7},{11 0,7},{110,7},{111,7},{111,8},{111,7},{183,7},{111,7},{112,7},{112,8},{112,7},{1,7},{112,7},{113,7},{113,8},{113,7},{18 2,7},{113,7},{114,7},{114,8},{114,7},{5,7},{114,7},{115,7},{115,8},{115,7},{183,7},{115,7},{116,7},{116,8},{116,7},{1,7 },{1116,7},{117,7}{117,8},{117,7},{76,7},{117,7},{118,7},{118,8},{118,7},{183,7},{118,7},{119,7},{119,8},{119,7},{1,7}, {119,7},{120,7},{120,8},{120,7},{183,7},{120,7},{121,7},{121,8},{121,7},{5,7},{121,7},{122,7},{122,8},{122,7},{183,7}, {122,7},{123,7},{123,8},{123,7},{1,7},{123,7},{124,7},{124,8},{124,7},{38,7},{124,7},{125,7},{125,8},{125,7},{237,7},{ 125,7},{126,7},{126,8},{126,7},{0,7},{126,7},{127,7},{127,8},{127,7},{127,7},{127,7},{128,7},{128,8},{128,7},{183,7},{ 128,7},{129,7},{129,8},{129,7},{1,7},{129,7},{130,7},{130,8},{130,7},{182,7},{130,7},{131,7},{131,8},{131,7},{131,7},{ 131,7},{132,7},{132,8},{132,7},{183,7},{132,7},{133,7},{133,8},{133,7},{1,7},{133,7},{134,7},{134,8},{134,7},{182,7},{ 134,7},{135,7},{135,8},{135,7},{5,7},{135,7},{136,7},{136,8},{136,7},{183,7},{136,7},{137,7},{137,8},{137,7},{1,7},{13 7,7},{138,7},{138,8},{138,7},{76,7},{138,7},{139,7},{139,8},{139,7},{183,7},{139,7},{140,7},{140,8},{140,7},{1,7},{140, 7},{141,7},{141,8},{141,7},{183,7},{141,7},{142,7},{142,8},{142,7},{5,7},{142,7},{143,7},{143,8},{143,7},{183,7},{143, 7},{144,7},{144,8},{144,7},{1,7},{144,7},{145,7},{145,8},{145,7},{38,7},{145,7},{146,7},{146,8},{146,7},{237,7},{146,7 },{147,7},{147,8},{147,7},{0,7},{147,7},{148,7},{148,8},{148,7},{148,7},{148,7},{149,7},{149,8},{149,7},{183,7},{149,7 },{150,7},{150,8},{150,7},{1,7},{150,7},{151,7},{151,8},{151,7},{182,7},{151,7},{152,7},{152,8},{152,7},{152,7},{152,7 },{153,7},{153,8},{153,7},{183,7},{153,7},{154,7},{154,8},{154,7},{1,7},{154,7},{155,7},{155,8},{155,7},{182,7},{155,7 },{156,7},{156,8},{156,7},{5,7},{156,7},{157,7},{157,8},{157,7},{183,7},{157,7},{158,7},{158,8},{158,7},{1,7},{158,7},{ 159,7},{159,8},{159,7},{76,7},{159,7},{160,7},{160,8},{160,7},{183,7},{160,7},{161,7},{161,8},{161,7},{1,7},{161,7},{1 62,7},{162,8},{162,7},{183,7},{162,7},{163,7},{163,8},{163,7},{5,7},{163,7},{164,7},{164,8},{164,7},{183,7},{164,7},{1 65,7},{165,8},{165,7},{1,7},{165,7},{166,7},{166,8},{166,7},{38,7},{166,7},{167,7},{167,8},{167,7},{237,7},{167,7},{16 8,7},{168,8},{168,7},{0,7},{168,7},{169,7},{169,8},{169,7},{169,7},{169,7},{170,7},{170,8},{170,7},{183,7},{170,7},{17 1,7},{171,8},{171,7},{1,7},{171,7},{172,7},{172,8},{172,7},{182,7},{172,7},{173,7},{173,8},{173,7},{173,7},{173,7},{17 4,7},{174,8},{174,7},{183,7},{174,7},{175,7},{175,8},{175,7},{1,7},{175,7},{176,7},{176,8},{176,7},{182,7},{176,7},{17 7,7},{177,8},{177,7},{5,7},{177,7},{178,7},{178,8},{178,7},{183,7},{178,7},{179,7},{179,8},{179,7},{1,7},{179,7},{180,7 },{180,8},{180,7},{76,7},{180,7},{181,7},{181,8},{181,7},{183,7},{181,7},{182,7},{182,8},{182,7},{1,7},{182,7},{183,7}, {183,8},{183,7},{183,7},{183,7},{184,7},{184,8},{184,7},{5,7},{184,7},{185,7},{185,8},{185,7},{183,7},{185,7},{186,7}, {186,8},{186,7},{1,7},{186,7},{187,7},{187,8},{187,7},{38,7},{187,7},{188,7},{188,8},{188,7},{237,7},{188,7},{189,7},{ 189,8},{189,7},{0,7},{189,7},{190,7},{190,8},{190,7},{190,7},{190,7},{191,7},{191,8},{191,7},{183,7},{191,7},{192,7},{ 192,8},{192,7},{1,7},{192,7},{193,7},{193,8},{193,7},{182,7},{193,7},{194,7},{194,8},{194,7},{194,7},{194,7},{195,7},{ 195,8},{195,7},{183,7},{195,7},{196,7},{196,8},{196,7},{1,7},{196,7},{197,7},{197,8},{197,7},{182,7},{197,7},{198,7},{ 198,8},{198,7},{5,7},{198,7},{199,7},{199,8},{199,7},{183,7},{199,7},{200,7},{200,8},{200,7},{1,7},{200,7},{201,7},{20 1,8},{201,7},{76,7},{201,7},{202,7},{202,8},{202,7},{183,7},{202,7},{203,7},{203,8},{203,7},{1,7},{203,7},{204,7},{204, 8},{204,7},{183,7},{204,7},{205,7},{205,8},{205,7},{5,7},{205,7},{206,7},{206,8},{206,7},{183,7},{206,7},{207,7},{207, 8},{207,7},{1,7},{207,7},{208,7},{208,8},{208,7},{38,7},{208,7},{209,7},{209,8},{209,7},{237,7},{209,7},{210,7},{210,8 },{210,7},{0,7},{210,7},{211,7},{211,8},{211,7},{211,7},{211,7},{212,7},{212,8},{212,7},{183,7},{212,7},{213,7},{213,8 },{213,7},{1,7},{213,7},{214,7},{214,8},{214,7},{182,7},{214,7},{215,7},{215,8},{215,7},{215,7},{215,7},{216,7},{216,8 },{216,7},{183,7},{216,7},{217,7},{217,8},{217,7},{1,7},{217,7},{218,7},{218,8},{218,7},{182,7},{218,7},{219,7},{219,8 },{219,7},{5,7},{219,7},{220,7},{220,8},{220,7},{183,7},{220,7},{221,7},{221,8},{221,7},{1,7},{221,7},{222,7},{222,8},{ 222,7},{76,7},{222,7},{223,7},{223,8},{223,7},{183,7},{223,7},{224,7},{224,8},{224,7},{1,7},{224,7},{225,7},{225,8},{2 25,7},{183,7},{225,7},{226,7},{226,8},{226,7},{5,7},{226,7},{227,7},{227,8},{227,7},{183,7},{227,7},{228,7},{228,8},{2 28,7},{1,7},{228,7},{229,7},{229,8},{229,7},{38,7},{229,7},{230,7},{230,8},{230,7},{237,7},{230,7},{231,7},{231,8},{23 1,7},{0,7},{231,7},{232,7},{232,8},{232,7},{232,7},{232,7},{233,7},{233,8},{233,7},{183,7},{233,7},{234,7},{234,8},{23 4,7},{1,7},{234,7},{235,7},{235,8},{235,7},{182,7},{235,7},{236,7},{236,8},{236,7},{236,7},{236,7},{237,7},{237,8},{23 7,7},{183,7},{237,7},{238,7},{238,8},{238,7},{1,7},{238,7},{239,7},{239,8},{239,7},{182,7},{239,7},{240,7},{240,8},{24 0,7},{5,7},{240,7},{241,7},{241,8},{241,7},{183,7},{241,7},{242,7},{242,8},{242,7},{1,7},{242,7},{243,7},{243,8},{243,7 },{76,7},{243,7},{244,7},{244,8},{244,7},{183,7},{244,7},{245,7},{245,8},{245,7},{1,7},{245,7},{246,7},{246,8},{246,7}, {183,7},{246,7},{247,7},{247,8},{247,7},{5,7},{247,7},{248,7},{248,8},{248,7},{183,7},{248,7},{249,7},{249,8},{249,7}, {1,7},{249,7},{250,7},{250,8},{250,7},{38,7},{250,7},{251,7},{251,8},{251,7},{237,7},{251,7},{252,7},{252,8},{252,7},{ 0,7},{252,7},{253,7},{253,8},{253,7},{253,7},{253,7},{254,7},{254,8},{254,7},{183,7},{254,7},{255,7},{255,8},{255,7},{ 1,7},{255,7},{0,7},{0,8}}

### ANNEXE 3

### Codage des différentes instructions à 7 cycles (fichier try7.txt)

{{LDA,0},{LDA,1},{LDA,2}, ...(insérer ici des éléments de la forme {LDA,i}) ...,{LDA,251}, {LDA,252}, {LDA,253}, {LDA,254},{LDA,255},{BRA,0},{BRA,1},{BRA,2},...insérer ici des éléments de la forme {BRA, i}) ..., {BRA,253}, {BRA,254}, {BRA,255}, {INC,0}}

### ANNEXE 4

### Codage des différentes instructions à 8 cycles (fichier try8.txt)

{{STA,1},{STA,2},...insérer ici des éléments de la forme {STA, i))...,{STA,252},{STA,253},{STA,254},{STA,255}, {STA,0}}

### ANNEXE 5

| | | | | |
|---|---|---|---|---|
| portR | equ | $00 | ; | read port location |
| PortS | equ | PortR+1 | ; | send port location |
| | org | portR | ; | |
| | dw | $0000 | ; | |
| start: | sta | portS | ; | |
| addr1 | lda | portR | ; | |
| | sta | portS | ; | |
| | lda | addrl+1 | ; | |
| | sta | portS | ; | |
| | inca | | ; | |
| | sta | portS | ; | |
| | sta | addrl+1 | ; | |
| | sta | portS | | |
| | bne | send | ; | |
| | org | $1ffE | ; | |
| | dw | start | ; | |

## Revendications

1. Procédé de vérification de la conformité du contenu logique d'un appareil informatique (2) à un contenu de référence,
l'appareil informatique présentant un processeur (4), une mémoire (6) dans laquelle le processeur peut lire et écrire, et un dispositif d'entrée sortie (8) permettant un dialogue entre le processeur (4) de l'appareil et le monde extérieur
le procédé comprenant les étapes suivantes
- envoi (10) à l'appareil (2) d'une demande de chargement dans la mémoire (6) et d'exécution d'un programme de vérification (P), le programme de vérification étant capable d'écrire des données dans la mémoire (6) de l'appareil et de lire des données dans la mémoire (6) pour les envoyer vers le dispositif d'entrée sortie (8);
- envoi (12) à l'appareil d'une demande d'exécution du programme (P) pour saturer la mémoire (6) disponible non occupée par le programme (P);
- échange (14, 16) de messages avec l'appareil exécutant le programme (P) et
- vérification (18) de la conformité du contenu logique de l'appareil en fonction des messages échangés avec l'appareil.

2. Le procédé de la revendication 1, dans lequel la vérification de la conformité s'effectue en fonction du contenu des messages échangés avec l'appareil.

3. Le procédé de la revendication 1 ou 2, dans lequel la vérification de la conformité s'effectue en fonction de la mesure du cadencement dans le temps des messages échangés avec l'appareil.

4. Le procédé de la revendication 3, dans lequel le programme de vérification (P) comprend des instructions de lecture supplémentaires, provoquant une activité accrue sur le dispositif d'entrée sortie (8).

5. Le procédé de l'une des revendications 1 à 4, comprenant en outre une étape de preuve de la vérification de la conformité par une technique de retour arrière appliquée au jeu d'instructions exécutable par le processeur (4).

6. Le procédé de la revendication 5, dans lequel l'étape de preuve de la conformité par une technique de retour arrière comprend l'évaluation des différentes instructions candidates de manière concrète.

7. Le procédé de la revendication 5, dans lequel l'étape de preuve de la conformité par une technique de retour arrière comprend l'évaluation des différentes instructions candidates de manière abstraite.

8. Le procédé de l'une des revendications 1 à 4, comprenant en outre une étape de preuve de la vérification de la conformité par une recherche exhaustive des programmes possibles appliquée au jeu d'instructions exécutables par le processeur (4).

9. Le procédé de l'une des revendications 1 à 8, dans lequel la demande de chargement dans la mémoire comprend une demande de chargement du programme de vérification (P) dans la mémoire (6) à partir du dispositif d'entrée sortie (8).

10. Le procédé de l'une des revendications 1 à 8, dans lequel la demande de chargement dans la mémoire comprend une demande d'activation d'un programme de vérification (P) contenu dans l'appareil.

11. Le procédé de l'une des revendications 1 à 10, dans lequel l'exécution du programme (P) pour saturer la mémoire disponible comprend la lecture de données de bourrage depuis le dispositif d'entrée sortie et l'écriture des données de bourrage dans la mémoire.

12. Le procédé de l'une des revendications 1 à 11, dans lequel l'exécution du programme (P) pour saturer la mémoire disponible comprend la lecture d'un problème depuis le dispositif d'entrée sortie et la résolution par le programme de vérification (P) du problème en utilisant la mémoire disponible.

13. Le procédé de l'une des revendications 1 à 12, dans lequel l'exécution du programme (P) pour saturer la mémoire disponible comprend la lecture d'une graine depuis le dispositif d'entrée sortie et l'expansion de la graine en utilisant la mémoire disponible.

14. Le procédé de l'une des revendications 1 à 13, dans lequel l'échange de messages comprend :
- l'envoi (14) à l'appareil d'une demande de lecture de données de la mémoire (6); et
- la réception (16) depuis l'appareil des données lues dans la mémoire (6), y compris le code du programme de vérification.

15. Le procédé de l'une des revendications 1 à 13, dans lequel le programme de vérification est capable d'exécuter une fonction sur des données de la mémoire, et dans lequel l'échange de message comprend :
- l'envoi (14) à l'appareil d'une demande d'exécution de la fonction et de lecture de données de la mémoire (6); et
- la réception (16) depuis l'appareil du résultat de la fonction et du code du programme de vérification lue dans la mémoire.

16. Le procédé de la revendication 15, dans lequel la fonction comprend le calcul de hachage des données de la mémoire autres que le code du programme de vérification.

17. Le procédé de l'une des revendications 1 à 13, dans lequel l'exécution du programme (P) pour saturer la mémoire disponible comprend la lecture d'un problème depuis le dispositif d'entrée sortie et la résolution du problème en utilisant la mémoire disponible
et dans lequel l'échange de message comprend :
- l'envoi (14) à l'appareil d'un problème; et
- la réception (16) depuis l'appareil du résultat du problème et du code du programme de vérification lue dans la mémoire.

18. Le procédé de l'une des revendications 1 à 17, dans lequel le code du programme de vérification comprend des instructions de relecture du code vers le dispositif d'entrée sortie.

19. Le procédé de l'une des revendications 1 à 18, dans lequel l'exécution du programme de vérification provoque l'effacement de la mémoire, à l'exclusion du code du programme de vérification.

20. Un procédé de restauration d'un appareil informatique présentant un processeur (4), une mémoire (6) dans laquelle le processeur peut lire et écrire, et un dispositif d'entrée sortie (8) permettant un dialogue entre le processeur (4) de l'appareil et le monde extérieur,
le procédé comprenant les étapes de
- sauvegarde (30) vers le monde extérieur des données présentes dans la mémoire (6);
- vérification (32) de la conformité du contenu logique de l'appareil informatique (2) à un contenu de référence, suivant le procédé de l'une des revendications 1 à 19;
- analyse (34) et le cas échéant traitement des données sauvegardées et
- recopie (38) des données analysées dans la mémoire de l'appareil.

21. Un appareil informatique, comprenant un processeur (4), une mémoire (6) dans laquelle le processeur peut lire et écrire, un dispositif d'entrée sortie (8) permettant un dialogue entre le processeur (4) de l'appareil et le monde extérieur et un programme de vérification stocké dans l'appareil, le programme de vérification comprenant des instructions adaptées à provoquer, lorsqu'il est exécuté par le processeur,
- l'écriture de données dans la mémoire (6) de l'appareil et
- la lecture des données dans la mémoire (6), y-compris le code du programme de vérification, pour les envoyer vers le dispositif d'entrée sortie (8).

22. Un dispositif informatique, comprenant
- un premier sous-ensemble présentant un processeur, une mémoire dans laquelle le processeur peut lire et écrire, et un dispositif d'entrée sortie;
- un deuxième sous-ensemble, le deuxième sous-ensemble étant adapté à dialoguer avec le processeur du premier sous-ensemble à travers le dispositif d'entrée sortie et à vérifier la conformité de l'état logique du premier sous-ensemble suivant le procédé de l'une des revendications 1 à 19.
